# EUROPÄISCHE PATENTSCHRIFT

(11) **EP 2 168 747 B1**
(45) Veröffentlichungstag und Bekanntmachung des Hinweises auf die Patenterteilung: **16.12.2015**
(21) Anmeldenummer: 09168158.5
(22) Anmeldetag: 19.08.2009
(51) Int. Cl.: B29C 44/04, B29C 44/06, B29C 44/58, B29C 45/16, B29C 45/27, B29L 9/00

(54) **Verfahren zur Herstellung eines Formteils aus einem starren Kunststoffträger und einer darüber angeordneten flexiblen Schaumkunststoffschicht und Vorrichtung**
Method for producing a moulded part from a rigid plastic holder and a flexible foam plastic layer positioned above it and apparatus
Procédé de fabrication d'une pièce de formage à partir d'un support en matière synthétique fixe et d'une couche de matière synthétique en mousse flexible agencée sur celui-ci et dispositif

(30) Priorität: 26.08.2008 EP 08162937
(43) Veröffentlichungstag der Anmeldung: 31.03.2010
(73) Patentinhaber: ENGEL AUSTRIA GmbH, 4311 Schwertberg (AT); Georg Kaufmann Formenbau AG, 5453 Busslingen (CH); SO.F.TER. TECNOPOLIMERI SRL, 47122 Forli-cesena (IT)
(72) Erfinder: Völkel, Mark, 68526 Ladenburg (DE); Eipper, Andreas, 49082 Osnabrück (DE); Fischer, Michael, 4030 Linz (AT); Kaufmann, Roger, 5507 Mellingen (CH); Pizzati, Gianluca, 22070 Senna Comasco (IT)
(74) Vertreter: Torggler, Paul Norbert

(56) Entgegenhaltungen:
- EP-A2- 0 180 733
- DE-A1- 19 617 284
- DE-A1-102004 007 865
- US-A- 5 536 458
- US-A1- 2005 183 897
- US-A1- 2006 006 570

## Beschreibung

Die Erfindung betrifft ein Verfahren zur Herstellung eines Formteils aus einem starren Kunststoffträger und einer darüber angeordneten flexiblen Schaumkunststoffschicht, gemäß Anspruch 1, sowie eine Vorrichtung zur Durchführung des Verfahrens, gemäß Anspruch 7.

Formteile aus einem starren Kunststoffträger und einer darüber angeordneten flexiblen Schaumkunststoffschicht werden beispielsweise im Automobilbau eingesetzt. An die Oberfläche derartiger Formteile werden hohe ästhetische Anforderungen gestellt, insbesondere wenn diese sichtbar im Kraftfahrzeug eingebaut sind. Dies bedeutet insbesondere, dass die Oberfläche keine Anzeichen von Gasblasen oder von Vertiefungen oder Dellen enthalten darf.

Die US 2005/0183897 beschreibt ein Formteil für Automobile umfassend einen starren Träger und eine Deckschicht, die eine innere Schicht umfasst, die aus einem Schaumstoff, beispielsweise einem thermoplastischen Elastomer, gebildet ist. Das Dokument offenbart nicht, dass am Ende der Schmelzfront der treibmittelhaltigen Kunststoffschmelze Treibmittel aus dem Formteil entfernt wird.

Die US 5,536 458 beschreibt eine Vorrichtung und ein Verfahren zur Herstellung eines Polyurethan-Formteiles mit unterschiedlichen Oberflächen und Kemeigenschaften, wobei die Vorrichtung eine Kavität aufweist, an den sich ein Überlaufkanal anschließt, worin sich Treibmittel zusammen mit Kunststoff sammelt und verworfen wird. Am Ende der Kavität ist eine Vakuumpumpe vorgesehen, über die Treibmittel aus dem Formteil entfernt werden kann.

Die US 2006/006570 beschreibt eine Vorrichtung zum Spritzgießen mit einer Kavität mit einem Entlüftungskanal, wobei zwischen der Kavität und dem Entlüftungskanal ein Überlauf vorgesehen ist.

Die DE 196 17 284 beschreibt eine Form zur Herstellung von Kunststoffformteilen, die in der Formtrennebene einen evakuierbaren Drainagekanal aufweisen. Dadurch kann Gas, im Allgemeinen Luft, aus der Formtrennebene in den Drainagekanal evakuiert werden.

Die DE 10 2004 007865 beschreibt ein weiteres Formwerkzeug zur Herstellung von Verbundelementen, mit einer Werkzeugkavität, um die umlaufend ein evakuierbarer Unterdruckraum gebildet ist. Die EP 0 180 733 beschreibt ein Verfahren nach dem Oberbegriff des Anspruchs 1, sowie eine Vorrichtung nach dem Oberbegriff des Anspruchs 7.

Aufgabe der vorliegenden Erfindung war es daher, ein Verfahren zur Herstellung eines Formteils aus einem starren Kunststoffträger und einer darüber angeordneten flexiblen Schaumkunststoffschicht sowie eine hierfür geeignete Vorrichtung zur Verfügung zu stellen, wobei die äußere Schaumkunststoffschicht den Qualitätsanforderungen an eine sichtbare Oberfläche im Automobilbau genügt.

Die Aufgabe wird gelöst durch ein Verfahren zur Herstellung eines Formteils aus einem starren Kunststoffträger und einer darüber angeordneten flexiblen Schaumkunststoffschicht gemäß Anspruch 1.

Als Kunststoffe für das Formteil eignen sich zum Beispiel thermoplastische Polymere, insbesondere thermoplastische Elastomere (TPE). Besonders bevorzugt sind thermoplastische Polyurethane (TPU), thermoplastische Polyolefinelastomere (TPO) zum Beispiel Polyethylen, Ethylencopolymere, Ethylen-Propylen-Dienmonomer-Kautschuk (EPM-Kautschuk) usw., thermoplastische Kautschukvulkanisate (TPV) wie NBR/Polyolefin-Mischungen, EPTM/PP-Mischungen usw., thermoplastische Polyamide (TPA), thermoplastische Copolyester (TPC), deren Mischungen oder Legierungen mit Acrylaten, thermoplastische Styrolelastomere (TPS) wie Styrol-Butadien-Blockcopolymer (SBS) oder Styrol-Ethylen-Butadien-Blockcopolymer (SEBS), Styrol-Ethylen-Propylen-Blockcopolymer (SEPS), Styrol-Isopren-Blockcopolymer (SIS), Ethylvinylacetat (EVA) und deren Legierungen und Mischungen.

Als Treibmittel können alle dem Fachmann bekannten Treibmittel eingesetzt werden, mit denen sich eine Polymerschmelze zu einem Kunststoffschaum aufschäumen lässt. Bevorzugt als Treibmittel sind Gase, die gegenüber dem Kunststoff inert sind. Besonders bevorzugt sind Luft, Stickstoff und Kohlendioxid, insbesondere Stickstoff.

Als Treibmittel können neben den vorstehenden Gasen auch chemische Treibmittel, so genannte "chemical blowing agents (CBA)" sowohl organischer als auch anorganischer Art eingesetzt werden. Geeignete Treibmittel sind zum Beispiel Azodicarbonamid (ADC), 4,4-Oxibisbenzolsulfonylhydrazid (OBSH), p-Toluolsulfonylhydrazid (TSH), 5-Phenylhydrazol (5-PT), p-Toluolsulfonylsemicarbazid (PTSS), Di-nitropentamethylentetramin (DNPT), Natriumbicarbonat (SBC), Zinkcarbonat (ZnCO₃) usw.

Bevorzugt werden als Treibmittel jedoch Gase eingesetzt. Um kleine und gleichmäßig verteilte Blasen mit einer gleichmäßigen Größe zu erhalten ist eine homogene Keimbildung notwendig. Hierzu sind ein hoher Druck, hohe Temperatur und ein großer Anteil an Treibmittel erforderlich. Starke Größenunterschiede in den Blasen und ungleichmäßig verteilte Blasen führen zu einer Verschlechterung der mechanischen Eigenschaften, d. h. der Schlagzähigkeit, der Sprödigkeit und der Dauerfestigkeit sowie der ästhetischen Eigenschaften.

Die Verfahrenstemperatur liegt in Abhängigkeit vom eingesetzten Kunststoff vorzugsweise im Bereich von 170 bis 280°C. Der Druck, bei dem das Treibmittel zugegeben wird liegt vorzugsweise bei mindestens 300 bar. Der Anteil am Treibmittel liegt vorzugsweise im Bereich von 0,1 bis 3 Gew.-% bezogen auf das Gesamtgewicht. Bei Verwendung eines Gases als Treibmittel, liegt der Anteil vorzugsweise im Bereich von 0,5 bis 1,5 Vol.-%.

Um einen hinreichend feinzelligen geschäumten Kern des eingesetzten Kunststoffes zu erzielen wird die treibmittelhaltige Polymerschmelze, insbesondere bei Verwendung eines Gases als Treibmittel, mit einem Druck von mindestens 300 bar in das Werkzeug eingespritzt.

Die Herstellung des Formteils erfolgt üblicherweise mit Hilfe einer Spritzgussmaschine. Diese umfasst eine Schneckenkolbenmaschine mit einer axial verschiebbaren Schnecke sowie das Werkzeug, welches mit der Schneckenkolbenmaschine verbunden wird.

In der Schneckenkolbenmaschine wird ein Polymergranulat aufgeschmolzen und auf den erforderlichen Druck komprimiert. Dies erfolgt im Allgemeinen mit Hilfe einer oder mehrerer Schnecken. Das für die Herstellung des Schaums erforderliche Treibmittel wird über eine Begasungsstelle in der Schneckenkolbenmaschine zugegeben. Der Druck des zugegebenen Gases beträgt vorzugsweise mindestens 350 bar, der Druck der Schmelze an der Zugabestelle des Gases mindestens 300 bar. Damit das Gas in die Polymerschmelze gelangt und keine Polymerschmelze an der Begasungsöffnung aus dem Schneckenkolbenmaschine austreten kann, ist es erforderlich, dass der Druck, mit dem das Gas der Polymerschmelze zugegeben wird, mindestens genauso groß ist wie der Druck der Polymerschmelze. Durch die Zugabe des Treibmittels in die Polymerschmelze ist das Treibmittel in der gesamten Polymerschmelze enthalten.

Das Treibmittel, das zum Aufschäumen zwecks Erhalt der flexiblen Schaumkunststoffschicht notwendig ist, beeinträchtigt durch ungleichförmige Blasenbildung insbesondere am Ende der Schmelzefront, wo der geringste Druck herrscht, die Optik der Oberfläche des Formteils.

Es wurde gefunden, dass die Beeinträchtigung der Optik durch ungleichmäßige Blasenbildung vermieden werden kann, indem am Ende der Schmelzefront der treibmittelhaltigen Kunststoffschmelze Treibmittel aus dem Formteil entfernt wird.

Dies erfolgt in einer Ausführungsvariante, indem an dem dem Einspritzpunkt entgegengesetzten Ende der Kavität ein oder mehrere Überlaufkanäle vorgesehen sind, worin sich das Material vom vordersten Ende der Schmelze, und worin sich unregelmäßige Blasen bilden, sammeln kann, das anschließend verworfen wird.

In einer Ausführungsform ist ein einziger Überlaufkanal aus der Kavität vorgesehen.

Dieser ist bevorzugt an der Stelle positioniert, die vom Einspritzpunkt in die Kavität am weitesten entfernt ist.

In einer weiteren Ausführungsvariante sind zwei Überlaufkanäle vorgesehen. Diese können bevorzugt symmetrisch angeordnet sein.

Bevorzugt wird das Volumen des einzigen Überlaufkanals oder das Gesamtvolumen der mehreren Überlaufkanäle dergestalt dimensioniert, dass es 1 bis 10 % des Volumens des Formteils beträgt.

In einer weiteren Ausführungsform wird Treibmittel am Ende der Schmelzefront der treibmittelhaltigen Kunststoffschmelze durch Anlegen von Vakuum entfernt. Bevorzugt ist ein Vakuum im Bereich von etwa 0,01 bar absolut bis etwa 0,5 bar absolut, bevorzugt etwa 0,07 bis 0,13 bar absolut.

Einspritzen der geeigneten Kunststoffschmelze für den starren Kunststoffträger und anschließend der treibmittelhaltigen Kunststoffschmelze für die flexible Schaumkunststoffschicht erfolgt über zwei oder mehrere Heißkanäle wobei allen Kanälen mit Ausnahme des Heißkanales, in den zuerst eingespritzt wird, jeweils ein Rückschlagventil zugeordnet ist, das sicherstellt, dass der Druck im Heißkanal stets so hoch ist, dass das Treibmittel nicht in den gasförmigen Zustand übertritt.

Je nach Geometrie des Formteils ist es häufig erforderlich, die Kavität über zwei oder mehrere Heißkanäle zu befüllen. Häufig werden 2 bis 7 oder auch 2 bis 3 Heißkanäle vorgesehen.

Wird ein Werkzeug zur Herstellung eines Formteils durch Spritzgießen über einen einzigen Heißkanal befüllt, so schießen beim Öffnen des Einspritzkanals, aufgrund des darin herrschenden sehr hohen Druckes, von in der Regel über 300 bar, Gas und Schmelze explosionsartig heraus. Im zuerst austretenden Material ist das Gas ungleichmäßig verteilt, und ergibt somit eine ungleichmäßige, ästhetisch nicht befriedigende Oberfläche. Daher ist im Anschluss an den Heißkanal und vor der Kavität zur Herstellung des Formteils ein Angusskanal vorgesehen um diese erste, nicht homogene Masse aufzunehmen. Das Volumen des Angusskanals wird in der Regel so dimensioniert, dass es 1 bis 10 % des Volumens des Formteils beträgt.

Sind mehrere Heißkanäle zum Befüllen der Kavität erforderlich, so laufen für den zuerst geöffneten Heißkanal zwar die oben geschilderten Phänomene ab, für alle weiteren Heißkanäle die nach dem ersten Heißkanal geöffnet werden, besteht jedoch die Gefahr, dass der Druck im Heißkanal selbst so weit absinken kann, dass Treibmittel im Heißkanal aus dem überkritischen Zustand in den gasförmigen Zustand tritt, das heißt, dass die Kunststoffschmelze im Heißkanal selbst aufschäumt. Dies würde zu einem ungleichmäßigen, schlecht regelbaren Füllen des Formteils führen.

Erfindungsgemäß ist daher jedem weiteren Heißkanal, mit Ausnahme des zuerst zu befüllenden Heißkanals ein Rückschlagventil zugeordnet, das so geregelt wird, dass der Druck im Heißkanal stets so hoch ist, dass das Treibmittel im Heißkanal nicht in den gasförmigen Zustand übertritt. Das Rückschlagventil ist im Bereich des dem Heißkanal zugeordneten Angusskanals angeordnet.

Gegenstand der Erfindung ist auch eine Vorrichtung zur Herstellung eines Formteils aus einem starren Kunststoffträger und einer darüber angeordneten flexiblen Schaumkunststoffschicht gemäß Anspruch 7.

Nicht gemäß der Erfindung ist eine Vorrichtung zur Herstellung eines Formteils aus einem starren Kunststoffträger und einer darüber angeordneten flexiblen Schaumkunststoffschicht durch Spritzgießen, umfassend ein Werkzeug, gebildet aus zwei Formhälften die eine Kavität begrenzen, die mit einem Heißkanal verbunden ist, durch den die Kavität mit einer geeigneten Kunststoffschmelze zur Herstellung des starren Kunststoffträgers und anschließend mit einer treibmittelhaltigen Kunststoffschmelze zur Herstellung der flexiblen Schaumkunststoffschicht befüllbar ist, wobei am Ende der Kavität eine Verbindung zu einer Vakuumpumpe vorgesehen ist, über die Treibmittel aus dem Formteil entfernt wird.

Die Erfindung wird im Folgenden anhand einer Zeichnung näher erläutert.

Es zeigen im Einzelnen:

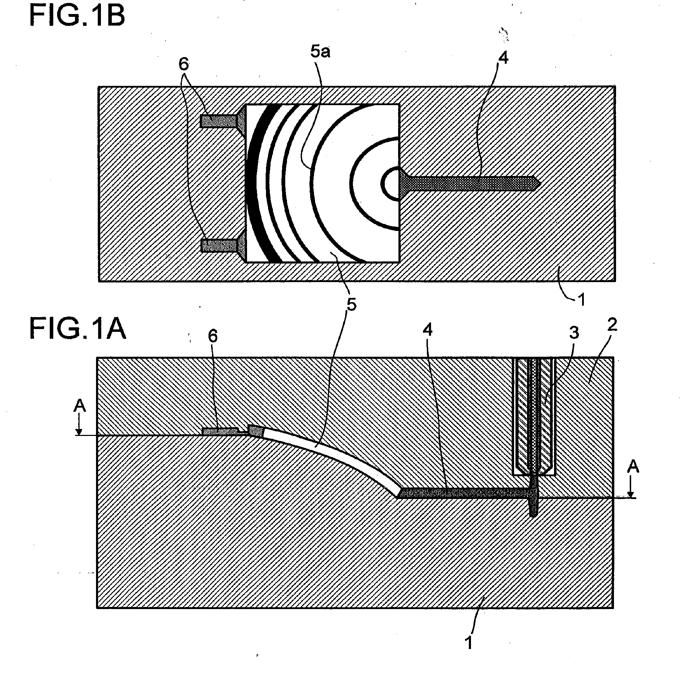

Figur 1A einen Querschnitt durch eine erste Ausführungsform eines erfindungsgemäßen Werkzeugs zur Herstellung eines Formteils aus einem starren Kunststoffträger und einer darüber angeordneten flexiblen Schaumkunststoffschicht durch Spritzgießen mit zwei Formhälften 1, 2, einem Heißkanal 3 zum Einspritzen einer Kunststoffschmelze, der in einen Angusskanal 4 mündet, anschließend in eine Kavität 5 und anschließend in einen Überlaufkanal 6.

Die Draufsicht entlang A-A bei einer angenommenen oberen durchsichtigen Formhälfte 2 ist in Figur 1B dargestellt und zeigt den Verlauf der Schmelzefront 5a in der Kavität 5 sowie zwei Überlaufkanäle 6, die beispielhaft an den Enden der Kavität 5 angeordnet sind, die vom Einspritzpunkt in die Kavität am weitesten entfernt sind.

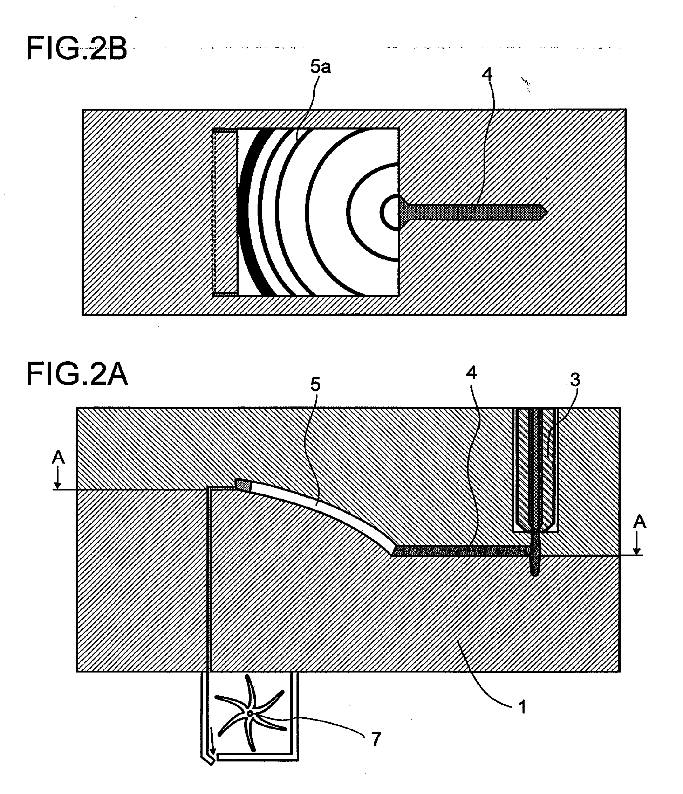

Die Ausführungsformen in den Figuren 2A und 2B unterscheiden sich von vorstehend beschriebenen dadurch, dass anstelle der Überlaufkanäle 6 am Ende der Kavität 5 eine Vakuumpumpe 7 vorgesehen ist.

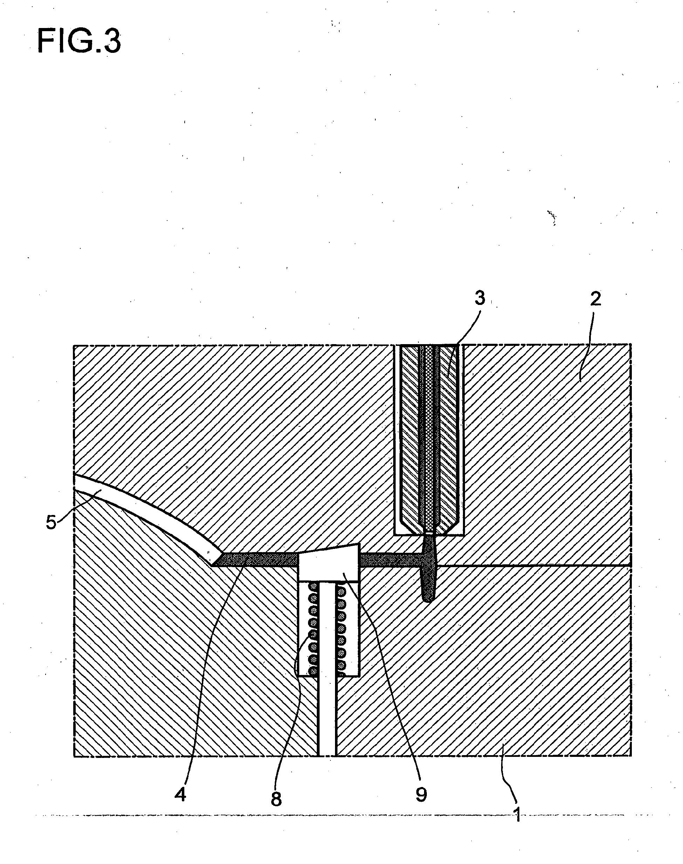

Figur 3 zeigt einen Ausschnitt aus einem Werkzeug mit mehreren Heißkanälen, wobei in der Figur lediglich ein Heißkanal 3 dargestellt ist, der nicht der zuerst zu befüllende Heißkanal ist. 1 und 2 bezeichnen die zwei Formhälften, 3 den Heißkanal, der nicht der zuerst befüllende Heißkanal ist, an den sich ein Angusskanal 4 anschließt, in dessen Bereich ein Rückschlagventil 8 mit Feder 9 vorgesehen ist. An den Angusskanal 4 schließt sich die Kavität 5 zur Herstellung des Formteils an.

## Patentansprüche

1. Verfahren zur Herstellung eines Formteils aus einem starren Kunststoffträger und einer darüber angeordneten flexiblen Schaumkunststoffschicht durch Spritzgießen in einem Werkzeug, umfassend zwei Formhälften (1, 2), die eine Kavität (5) begrenzen, wobei der starre Kunststoffträger durch Einspritzen einer geeigneten Kunststoffschmelze in die Kavität (5) und anschließend die flexible Schaumkunststoffschicht durch Einspritzen einer treibmittelhaltigen Kunststoffschmelze über zwei oder mehrere Heißkanäle (3), an die sich jeweils ein Angusskanal (4) anschließt erhalten wird, **dadurch gekennzeichnet, dass** am Ende der Schmelzefront (5a) der treibmittelhaltigen Kunststoffschmelze Treibmittel aus dem Formteil entfernt wird, indem die Schmelzefront (5a) der treibmittelhaltigen Kunststoffschmelze aus der Kavität heraus in einen oder mehrere sich an die Kavität sich anschließende Überlaufkanäle (6) verlagert wird und das sich in dem einen oder den mehreren Überlaufkanälen (6) sammelnde Treibmittel zusammen mit dem sich in dem einen oder den mehreren Überlaufkanälen (6) sammelnden Kunststoff verworfen wird und dass allen Heißkanälen (3) mit Ausnahme des Heißkanales (3), in den zuerst eingespritzt wird, jeweils ein Rückschlagventil (8) zugeordnet ist, das sicherstellt, dass der Druck im Heißkanal (3) stets so hoch ist, dass das Treibmittel nicht in den gasförmigen Zustand übertritt.

2. Verfahren nach Anspruch 1, **dadurch gekennzeichnet, dass** ein einziger Überlaufkanal (6) vorgesehen ist.

3. Verfahren nach Anspruch 2, **dadurch gekennzeichnet, dass** der einzige Überlaufkanal (6) an der Stelle positioniert ist, die vom Einspritzpunkt in die Kavität (5) am weitesten entfernt ist.

4. Verfahren nach Anspruch 1, **dadurch gekennzeichnet, dass** zwei Überlaufkanäle (6) vorgesehen sind.

5. Verfahren nach einem der Ansprüche 1 bis 4, **dadurch gekennzeichnet, dass** das Volumen des einzigen Überlaufkanals (6) oder das Gesamtvolumen der mehreren Überlaufkanäle (6) 1 bis 10 % des Volumens des Formteils beträgt.

6. Verfahren nach einem der Ansprüche 1 bis 5, **dadurch gekennzeichnet, dass** am Ende der Schmelzefront (5a) der treibmittelhaltigen Kunststoffschmelze Treibmittel durch Anlegen von Vakuum aus dem Formteil entfernt wird.

7. Vorrichtung zur Herstellung eines Formteils aus einem starren Kunststoffträger und einer darüber angeordneten flexiblen Schaumkunststoffschicht durch Spritzgießen, umfassend ein Werkzeug, gebildet aus zwei Formhälften (1, 2), die eine Kavität (5) begrenzen, die mit zwei oder mehreren Heißkanälen (3) verbunden ist, an die sich jeweils ein Angusskanal (4) anschließt, **dadurch gekennzeichnet, dass** sich an die Kavität (5) ein oder mehrere Überlaufkanäle (6) anschließen, und dass jedem der Heißkanäle (3) mit Ausnahme des Heißkanals (3), in den zuerst eingespritzt wird, ein Rückschlagventil zugeordnet ist.

## Claims

1. A process for the production of a moulded part comprising a rigid plastic carrier and a flexible foam plastic layer arranged thereover by injection moulding in a tool including two mould halves (1, 2) which define a cavity (5), wherein the rigid plastic carrier is obtained by injecting a suitable plastic melt into the cavity (5) and then the flexible foam plastic layer is obtained by injecting a propellant-bearing plastic melt by way of two or more hot runners (3) which are each adjoined by a respective sprue passage (4), **characterised in that** at the end of the melt front (5a) of the propellant-bearing plastic melt propellant is removed from the moulded part by the melt front (5a) of the propellant-bearing plastic melt being displaced out of the cavity into one or more overflow passages (6) adjoining the cavity and the propellant which collects in the one or more overflow passages (6) is discarded together with the plastic which collects in the one or more overflow passage (6) and that associated with all hot runners (3) with the exception of the hot runner (3) into which injection is first effected is a respective non-return valve (8) which ensures that the pressure in the hot runner (3) is always so high that the propellant does not change into the gaseous state.

2. A process according to claim 1 **characterised in that** there is provided a single overflow passage (6).

3. A process according to claim 2 **characterised in that** the single overflow passage (6) is positioned at the location furthest removed from the injection point into the cavity (5).

4. A process according to claim 1 **characterised in that** there are provided two overflow passages (6).

5. A process according to one of claims 1 to 4 **characterised in that** the volume of the single overflow passage (6) or the total volume of the plurality of overflow passages (6) is from 1 to 10% of the volume of the moulded part.

6. A process according to one of claims 1 to 5 **characterised in that** at the end of the melt front (5a) of the propellant-bearing plastic melt propellant is removed from the moulded part by applying vacuum.

7. Apparatus for producing a moulded part comprising a rigid plastic carrier and a flexible foam plastic layer arranged thereover by injection moulding, including a tool formed from two mould halves (1, 2) which define a cavity (5) connected to two or more hot runners (3) which are each adjoined by a respective sprue passage (4), **characterised in that** one or more overflow passages (6) adjoin the cavity (5) and that a non-return valve is associated with each of the hot runners (3) with the exception of the hot runner (3) into which injection is first effected.

## Revendications

1. Procédé destiné à la fabrication d'une pièce moulée à partir d'un support rigide en matière plastique et d'une couche flexible en matière plastique sous forme de mousse disposée au-dessus de lui, par moulage par injection dans un outil, comprenant deux moitiés de moule (1, 2) qui délimitent une cavité (5), le support rigide en matière plastique étant obtenu d'abord par l'injection d'une masse adéquate de matière plastique fondue dans la cavité (5), puis la couche flexible en matière plastique sous forme de mousse étant obtenue par l'injection d'une masse de matière plastique fondue contenant un agent d'expansion, par l'intermédiaire de deux canaux de chauffage (3) ou plus, auxquels vient se raccorder respectivement un canal d'alimentation (4), **caractérisé en ce qu'**un agent d'expansion est retiré de la pièce moulée à l'extrémité du front de matière plastique fondue (5a) de la masse de matière plastique fondue contenant un agent d'expansion, en ce sens que le front de matière plastique fondue (5a) de la masse de matière plastique fondue contenant un agent d'expansion est déplacé en dehors de la cavité dans un ou plusieurs canaux de débordement (6) reliés à la cavité, et en ce sens que l'agent d'expansion s'accumulant, dans l'un des ou dans les plusieurs canaux de débordement (6), est rejeté avec la matière plastique s'accumulant dans le ou les canaux de débordement (6), et **en ce qu'**à tous les canaux de chauffage (3), à l'exception du canal de chauffage (3) dans lequel la matière plastique est injectée en premier, est associée respectivement une soupape de retenue (8), qui garantit que la pression dans le canal de chauffage (3) reste constamment à un niveau tel que l'agent d'expansion ne passe pas à l'état gazeux.

2. Procédé selon la revendication 1, **caractérisé en ce qu'**un seul canal de débordement (6) est prévu.

3. Procédé selon la revendication 2, **caractérisé en ce que** le seul canal de débordement (6) est positionné à l'emplacement qui est le plus éloigné du point d'injection dans la cavité (5).

4. Procédé selon la revendication 1, **caractérisé en ce que** deux canaux de débordement (6) sont prévus.

5. Procédé selon l'une des revendications 1 à 4, **caractérisé en ce que** le volume du canal unique de débordement (6) ou que le volume total des plusieurs canaux de débordement (6) se situe entre 1 et 10% du volume de la pièce moulée.

6. Procédé selon l'une des revendications 1 à 5, **caractérisé en ce que** l'agent d'expansion est retiré de la pièce moulée par l'application d'un vide, à l'extrémité du front de matière plastique fondue (5a) de la masse de matière plastique fondue contenant un agent d'expansion.

7. Dispositif destiné à la fabrication d'une pièce moulée à partir d'un support rigide en matière plastique et d'une couche flexible en matière plastique sous forme de mousse, disposée au-dessus de lui, par moulage par injection, comprenant un outil formé de deux moitiés de moule (1, 2) qui délimitent une cavité (5) qui est reliée à deux canaux de chauffage (3) ou plus, auxquels vient se raccorder respectivement un canal d'alimentation (4), **caractérisé en ce qu'**un ou plusieurs canaux de débordement (6) sont raccordés à la cavité (5), et **en ce qu'**à chacun des canaux de chauffage (3), à l'exception du canal de chauffage (3) dans lequel la matière plastique est injectée en premier, est associée respectivement une soupape de retenue (8).
